# EUROPÄISCHE PATENTSCHRIFT

(11) **EP 1 048 200 B1**
(45) Veröffentlichungstag und Bekanntmachung des Hinweises auf die Patenterteilung: **17.03.2004**
(21) Anmeldenummer: 00108221.3
(22) Anmeldetag: 14.04.2000
(51) Int. Cl.: A01D 57/02

(54) **Haspel für eine Erntegutbergungseinrichtung**
Reel for a harvesting machine
Rabatteur pour machine de récolte

(30) Priorität: 28.04.1999 US 301262
(43) Veröffentlichungstag der Anmeldung: 02.11.2000
(73) Patentinhaber: DEERE & COMPANY, Moline, Illinois 61265-8098 (US)
(72) Erfinder: Coers, Bruce Alan, Hillsdale, IL 61257 (US); Pashan, Craig Steven, Bettendorf, IA 52722 (US)
(74) Vertreter: Holst, Sönke, Dr.

(56) Entgegenhaltungen:
- DD-A- 237 566
- DE-A- 2 148 952
- FR-A- 2 247 153
- US-A- 2 144 905
- US-A- 2 644 289
- US-A- 3 722 194
- DATABASE WPI Section PQ, Week 199134 Derwent Publications Ltd., London, GB; Class P12, AN 1991-251390 XP002141475 & SU 1 598 904 A (SHMARIN N S), 15. Oktober 1990 (1990-10-15)

## Beschreibung

Die Erfindung betrifft eine Haspel zur drehbaren Anbringung an einer Erntegutbergungsvorrichtung, insbesondere einem Schneidwerk, mit wenigstens einer drehbaren Schwenkwelle, an der Zinken befestigt sind, und mit einer Verstellvorrichtung, die ein Steuerelement mit einer endlosen Kurvenbahn umfasst, mit der ein die Drehstellung der Schwenkwelle in Abhängigkeit von der Drehstellung der Haspel steuernder Kurvenabnehmer zusammenwirkt.

Es ist aus der US 4 008 558 A bekannt, eine Haspel für das Schneidwerk einer Erntemaschine mit Zinken zu versehen, die eine konstante Stellung relativ zum Erdboden einnehmen. Die Bahnen der Spitzen der Zinken sind kreisförmig. Eine Vielzahl in seitlicher Richtung beabstandeter Sterne mit radial nach außen weisenden Armen, an denen außenseitig Schwenkwellen angeordnet sind, ist an der Welle der Haspel angebracht. Die Schwenkwellen sind durch Kurbelarme mit exzentrischen Elementen an den Enden der Haspel gekoppelt. Zinken sind an jeder Schwenkwelle angebracht, und die Schwenkwellen drehen sich während der Drehung der Haspel relativ zu den Armen der Sterne, so dass die Zinken eine konstante Stellung relativ zum Erdboden einhalten.

Ein ähnlicher Mechanismus ist in der US 5 768 870 A gezeigt. Dort stellt der Verbindungsmechanismus, der die Orientierung der Zinken steuert, eine nicht-kreisförmige Umlaufbahn der Spitzen der Zinken bereit. Die Orientierung oder Stellung der Zinken relativ zum Erdboden bleibt in dem Bereich, in dem sie sich mit dem Erntegut in Eingriff befinden, konstant.

In beiden der genannten Patentschriften wird die Orientierung der Zinken durch eine Scheibe gesteuert, die exzentrisch zur Drehachse der Haspel angeordnet ist. Von der Scheibe erstrecken sich Verbindungen radial nach außen, die an Kurbelarme gekoppelt sind, welche an den Schwenkwellen befestigt sind. Bei einem derartigen Mechanismus ist die Bahn der Spitze der Zinken festgelegt und kann nicht durch den Benutzer eingestellt werden. Bei einigen Haspeln, wie beispielsweise der in der US 4 008 558 A offenbarten, ist ein Mechanismus bereitgestellt, durch den die Stellung der Zinken durch den Benutzer eingestellt werden kann, um das Erntegut in einem höheren oder geringeren Maße anzuheben. Während die Stellung der Zinken relativ zum Erdboden eingestellt werden kann, ist die von den Spitzen der Zinken beschriebene Bahn stets kreisförmig.

Andere Mechanismen zur Steuerung der Orientierung der Zinken sind in der SU 1 598 904 A, US 5 007 235 A, US 5 566 536 A und US 5 595 093 A wiedergegeben. Diese Patentschriften zeigen Kurvenbahnen zur Steuerung der Orientierung der Zinken. Die Kurvenbahnen können kreisförmig oder unregelmäßig geformt sein, um verschiedene Bahnen und Orientierungen der Zinken herbeizuführen. Ein Nachteil des Standes der Technik ist die fehlende Möglichkeit, die Bahnen der Zinken oder ihre Orientierungen zur Anpassung an unterschiedliche Bedingungen zu ändern.

Die DE 2 148 952 A beschreibt eine Heuwerbungsmaschine mit einem angetrieben umlaufenden Kreiselrechen, der eine Anzahl von an ihrem der Drehachse abgewandten Ende das Gut bearbeitende Zinken tragenden Armen enthält. Die Arme werden beim Umlauf zwecks Aushebens und Absenkens der Zinken mittels einer Steuerkurvenbahn und auf deren Laufflächen laufender Führungsrollen gesteuert geschwenkt. Die Steuerkurvenbahn weist einen unteren und einen oberen Teil auf, die aneinander befestigt sind. Beide Teile der Steuerkurvenbahn erstrecken sich über die gesamte Länge der Kurvenbahn. Es ist daher nicht möglich, nur Teile der Länge der Kurvenbahn auszutauschen, wenn sie verschlissen sind oder durch Teile mit anderen Formen ersetzt werden sollen.

Die der Erfindung zugrunde liegende Aufgabe wird darin gesehen, einen verbesserten Mechanismus zur Einstellung der Orientierung der Zinken einer Haspel bereitzustellen, bei dem eine Änderung der von den Zinken beschriebenen Bahn oder eines Teils davon möglich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Sich radial von der Welle der Haspel nach außen erstreckende, sternförmig angeordnete Arme tragen die Schwenkwellen. Wenn sich die angetriebene Haspel dreht, bewegen die sich radial erstreckenden Arme die Schwenkwellen auf einer kreisförmigen Bahn um die Welle der Haspel. Das Steuerelement ist ortsfest, dreht sich also nicht mit der Haspel mit. Die Kurvenabnehmer laufen den Schwenkwellen in der Regel nach und ihre Position relativ zu den Schwenkwellen variiert entsprechend der in dem Steuerelement definierten Kurvenbahn, so sich dass der Winkel der Schwenkwellen relativ zum Erdboden kontinuierlich ändert. Die Kurvenbahn definiert somit die Bahn der Spitzen der Zinken. Erfindungsgemäß ist das Steuerelement aus einzelnen Segmenten zusammengesetzt. Jedes Segment weist einen Teilbereich der Länge der Kurvenbahn auf. Die einzelnen Segmente können an ihren Endseiten aneinander lösbar fixiert sein und/oder an einem die Haspel halternden Trägerelement. Entfernbare Befestigungselemente können zum Befestigen der Segmente des Steuerelements benutzt werden. Ein Vorteil der Verwendung eines Steuerelements mit einer Kurvenbahn besteht darin, dass beliebige Kurvenformen und somit Drehwinkel der Schwenkwelle realisierbar sind. Es ist denkbar, Steuerelemente mit unterschiedlichen Kurvenbahnen zu verwenden, um verschiedene Bahnen der Spitzen der Zinken zu realisieren. Das Steuerelement kann zur Vereinfachung der Fertigung komplexer Formen der Kurvenbahn und zur Verminderung des Gewichts gegenüber gegossenen Metall-Steuerelementen aus Kunststoffmaterial hergestellt sein.

Auf diese Weise wird es möglich, ein oder mehrere Segmente zu entfernen und auszutauschen. Auch ist denkbar, einen Teil der Bahn der Spitzen der Zinken zu variieren, insbesondere den Teil der Bahn durch die Zone, in der die Zinken in das Erntegut eingreifen, es aufnehmen und es auf der Erntegutbergungsvorrichtung ablegen.

Bevorzugt ist die Verwendung eines Steuerelements, das mittels eines Kurbelarms auf die Schwenkwelle einwirkt und ihre Drehstellung definiert.

Das Steuerelement ist vorzugsweise ringförmig und in der Nähe der Schwenkwellen angebracht, um die Länge des zur Steuerung der Schwenkwelle dienenden Kurbelarms gering zu halten. Es könnte jedoch auch ein Exzenter als Steuerelement verwendet werden, wie er aus der US 4 008 558 A bekannt ist.

Die Segmente des Steuerelements sind vorzugsweise durch lösbare Befestigungselemente an Speichen befestigt, die sich radial bis zu einem Trägerelement der Haspel erstrecken, um die Segmente einfach von den Speichen trennen zu können. Man erreicht auf diese Weise, dass wenigstens eines der Segmente, bzw. alle Segmente, einzeln demontier- und austauschbar ist oder sind.

In der Guteingriffszone unterliegt das Steuerelement einer höheren Abnutzung. Durch die Fertigung des Steuerelements aus mehreren Segmenten reicht es aus, nur die von Verschleiß betroffenen Segmente auszutauschen.

Das Steuerelement kann an einem oder beiden Enden der Haspel angebracht werden. In der Regel werden zwei Steuerelemente verwendet, es ist aber auch denkbar, nur eines zu benutzen.

Das Steuerelement weist eine endlose, die Welle der Haspel umrundende Kurvenbahn auf, die vorzugsweise in Form eines in das Steuerelement eingebrachten Kanals realisiert ist. In die Kurvenbahn greift der Kurvenabnehmer ein. Alternativ wäre denkbar, dass der Kurvenabnehmer an einer (insbesondere äußeren oder inneren) Oberfläche des Steuerelements anliegt, und ggf. mit einer Federkraft beaufschlagt wird, die ihn gegen diese Oberfläche presst.

Die Erfindung kann bei beliebigen Erntegutbergungsvorrichtungen mit Haspeln verwendet werden, wie Schneidwerken oder Pick-Ups.

In den Zeichnungen ist ein nachfolgend näher beschriebenes Ausführungsbeispiel der Erfindung dargestellt. Es zeigt:
- Fig. 1: eine Seitenansicht eines Schneidwerks mit einer erfindungsgemäßen Haspel;
- Fig. 2: eine Seitenansicht des Schneidwerks, in der die Zinkenhöhe und der Weg der Zinkenspitzen beim Umlauf um die Haspel dargestellt sind; und
- Fig. 3: eine vergrößerte Teilansicht, in der der Aufbau des Steuerelements und das Zusammenwirken mit den Kurvenabnehmer wiedergegeben ist.

Die Erfindung ist in einem Schneidwerk verwirklicht, das in seiner Gesamtheit mit dem Bezugszeichen 10 gekennzeichnet ist. Das Schneidwerk 10 umfasst einen Schneidwerksrahmen 12 und linke und rechte Seitenwände 14, von denen nur eine gezeigt ist. Ein Boden 16 erstreckt sich zwischen den gegenüberliegenden Seitenwänden 14. Ein sich quer erstreckender Schneckenförderer 18 zum Zusammenführen von Erntegut ist oberhalb des Bodens 16 und in Vorwärtsbewegungsrichtung vor einer Rückwand 20 des Schneidwerks 10 befestigt. Ein sich ebenfalls quer erstreckender Mähwerksbalken 22 ist als Mäheinrichtung an der vorderen Kante des Bodens 16 angebracht und eine aufrecht angeordnete Absperrkante 23 für Erntegut ist zwischen dem Mähwerksbalken 22 und dem Boden 16 befestigt.

Eine insgesamt mit dem Bezugszeichen 24 gekennzeichnete Haspel des Aufsammel-Typs erstreckt sich über die Breite des Schneidwerks 10, vor dem Schneckenförderer 18 und oberhalb des Mähwerksbalkens 22. Die Haspel 24 ist am Schneidwerk 10 mittels eines Paares sich im wesentlichen von vorn nach hinten erstreckender Haspelträgerarme 26 befestigt, die mit dem Rahmen 12 des Schneidwerks 10 an ihren hinteren Enden durch quer zur Vorwärtsbewegungsrichtung verlaufende Schwenklager 28 verbunden sind. Die Haspelträgerarme 26 sind im wesentlichen oberhalb der linken und rechten Seitenwände 14 angeordnet. Die Haspelträgerarme 26 sind mittels eines Paares von Zylindern 30 vertikal verstellbar, die sich zwischen den Haspelträgerarmen 26 und den Seitenwänden 14 abstützen.

Am vorderen Ende jedes Haspelträgerarms 26 - ist eine hülsenartige Trägerstruktur 32 befestigt. Die Trägerstrukturen 32 sind in ihrer Position entlang des Haspelträgerarms 26 verschiebbar und werden durch ein zweites Paar von Zylindern 34 festgehalten.

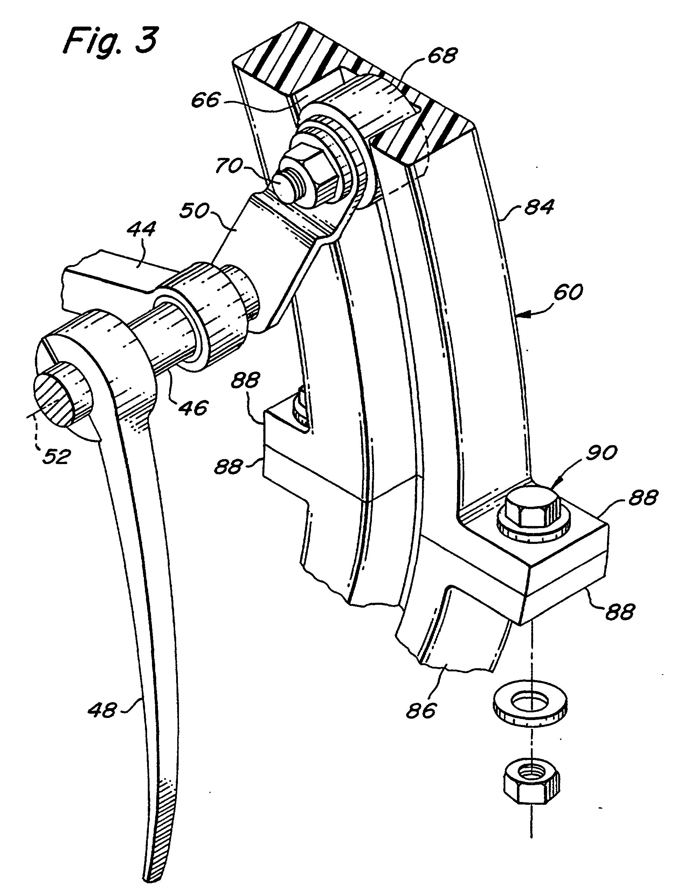

Eine röhrenförmige Welle 40 der Haspel 24 ist drehbar an den gegenüberliegenden Trägerstrukturen 32 gelagert und erstreckt sich zwischen ihnen. Die Welle 40 der Haspel 24 hat eine Anzahl radial beabstandeter, radial verlaufender Elemente oder Sterne 42. In der dargestellten Ausführungsform hat jeder der Sterne 42 sechs sich radial erstreckende Arme 44, die axial miteinander ausgerichtet sind. Eine sich quer erstreckende Schwenkwelle 46 ist drehbar an den äußeren Enden jedes Satzes axial ausgerichteter, sich radial erstreckender Arme 44 gelagert und erstreckt sich über die Breite der Haspel 24. Jede Schwenkwelle 46 trägt eine große Anzahl daran befestigter harkenartiger Finger oder Zinken 48. Kurbelarme 50 sind an den gegenüberliegenden Enden jeder Schwenkwelle 46 angebracht und drehen sich mit den Schwenkwellen 46 um die Achse 52 (Figur 3) jeder Schwenkwelle 46.

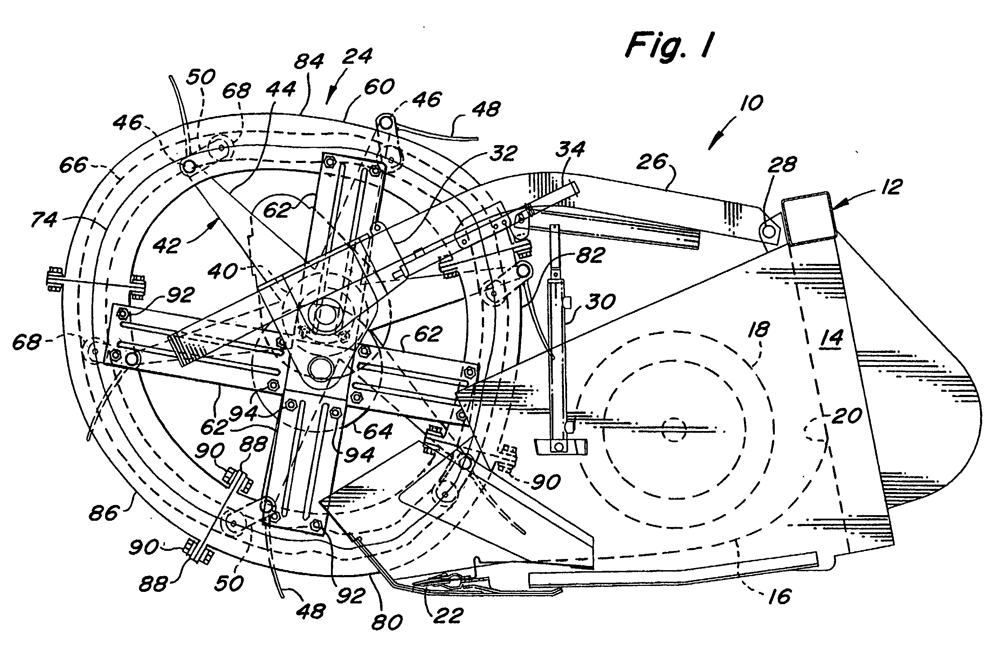

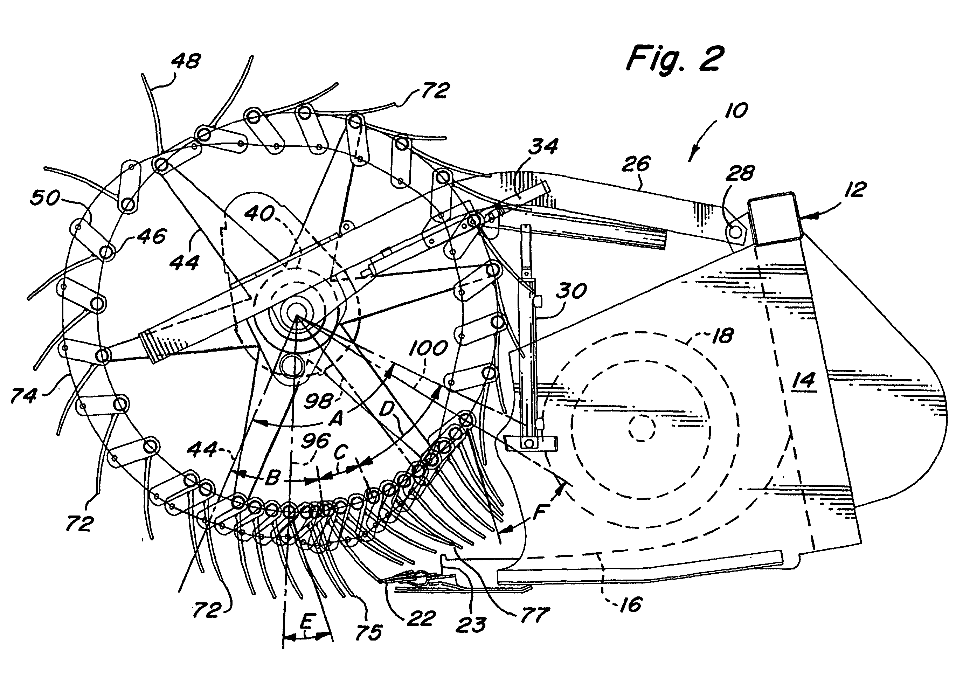

Ein Paar von Steuerelementen 60 steuert die jeweiligen Winkel der Schwenkwellen 46 und der Kurbelarme 50. An jedem Ende der Haspel 24 ist ein Steuerelement 60 angeordnet. Jedes Steuerelement 60 ist an einer Vielzahl von Speichen 62 befestigt, die an den Trägerstrukturen 32 mittels einer Platte 64 jeder Trägerstruktur 32 angebracht sind. Die zwei Steuerelemente 60 definieren parallele Kurvenbahnen. Ein Steuerelement 60 ist detaillierter in Figur 3 dargestellt. Das Steuerelement 60 ist ein aus Kunststoff gegossener Ring mit einem darin eingebrachten Kanal 66. Dadurch, dass das Steuerelement 60 aus Kunststoff gegossen ist, ist das Gewicht an der Vorderseite des Schneidwerks 10 im Vergleich mit einem aus Metall gegossenen Steuerelement 60 vermindert. Der Kanal 66 definiert eine endlose Kurvenbahn, die durch die Linie 74 in Figuren 1 und 2 wiedergegeben wird. Ein Kurvenabnehmer 68 in Form einer Rolle ist an jedem Kurbelarm 50 drehbar durch einen Drehbolzen 70 gelagert. Die Kurvenabnehmer 68 sind in den Kanälen 66 angeordnet und folgen der Kurvenbahn. Die Kurvenbahn ist derart angeordnet, dass die Schwenkwellen 46 sich bei jeder Umdrehung der Haspel 24 relativ zum Erdboden um 360 Grad drehen.

In der Figur 2 wird der Weg der Spitzen 72 der Zinken 48 bei ihrer Bewegung um die Haspel 24 detaillierter wiedergegeben. Ein Bereich, in dem die Zinken 48 in Eingriff mit dem Erntegut gelangen, ist zwischen den zwei radialen Linien dargestellt, die den Winkel "A" definieren. Dieser Winkel liegt näherungsweise zwischen der 7-Uhr-Position und der 4-Uhr-Position, wobei sich die Haspel 24 im Gegenuhrzeigersinn dreht. Der Bereich, in dem die Zinken 48 im Eingriff mit Erntegut sind, hat verschiedene Zonen, in denen die Stellung der Zinken variiert wird, um vorteilhafte Ergebnisse in der Behandlung des Gutes zu erzielen. Die Zinken 48 bewegen sich durch eine Annäherungszone, die in Figur 2 mit "B" gekennzeichnet ist, in der sich die Zinken 48 von der Haspel 24 radial nach außen erstrecken, und in der die Spitzen 72 der Zinken 48 sich auf einem im wesentlichen horizontalen Weg bewegen, um den Erdboden vor dem Mähwerksbalken 22 zu überstreichen. Die Annäherungszone entspricht einem ersten Winkelbereich der Haspel 24. Die Schwenkwellen 46 drehen sich relativ zum Erdboden geringfügig, - bezüglich der Figur 2 im Gegenuhrzeigersinn - um die Spitzen 72 der Zinken 48 auf einem im wesentlichen horizontalen Weg zu halten. Die Annäherungszone B endet näherungsweise an der in Figur 2 mit dem Bezugszeichen 75 gekennzeichneten Spitze eines Zinkens 48.

Nach der Annäherungszone B bewegen sich die Zinken 48 durch eine Anhebezone, die einem zweiten Winkelbereich der Haspel 24 entspricht und in Figur 2 mit "C" gekennzeichnet ist, in der die Schwenkwellen 46 sich weiter relativ zum Erdboden im Gegenuhrzeigersinn drehen, um die Spitzen 72 der Zinken 48 und das Erntegut über den Mähwerksbalken 22 und die Absperrkante 23 für Erntegut zu heben. Die Anhebezone C endet näherungsweise an der in Figur 2 mit dem Bezugszeichen 77 gekennzeichneten Spitze 77 eines Zinkens 48. Nach der Anhebezone C bewegen sich die Zinken 48 oberhalb des Vorderabschnitts des Bodens 16 des Schneidwerks 10. Dort ist der Anfang einer Freigabezone, die in Figur 2 mit "D" gekennzeichnet ist. Die Freigabezone entspricht einem dritten Winkelbereich der Haspel 24. In der Freigabezone D werden die Schwenkwellen 46 relativ zum Erdboden im Uhrzeigersinn gedreht. Dadurch wird es an den Zinken 48 anhaftendem Erntegut ermöglicht, auf das Schneidwerk 10 zu fallen, während die Zinken 48 eine vertikalere Orientierung annehmen. Die Zinken 48 drehen sich auch nach dem Verlassen der Freigabezone D im Uhrzeigersinn, um nicht mit dem Schneckenförderer 18 zusammenzustoßen. Die Drehung der Zinken 48 im Uhrzeigersinn in und nach der Freigabezone D erlaubt den Zinken 48, die Vorderseite des Bodens 16 zu überstreichen und trotzdem den Schneckenförderer 18 nicht zu berühren.

Die hier verwendeten Begriffe "im Uhrzeigersinn" und "im Gegenuhrzeigersinn" beziehen sich auf die in den Figuren 1 und 2 wiedergegebenen Ansichten des Schneidwerks 10. Sie sind nicht als einschränkende Begriffe zu betrachten, außer dass sich die Schwenkwellen 46 zuerst in eine Richtung und dann in einem Bereich, in dem die Zinken im Eingriff mit dem Erntegut sind, in die entgegengesetzte Richtung drehen.

In der Annäherungszone B sind die Zinken 48 relativ zur radialen Ebene 96 in einem voreilenden Winkel angeordnet. Dieser voreilende Winkel wird durch den Winkel E gekennzeichnet. Der Winkel E des Zinkens 48 ist relativ zur radialen Ebene 96 in der im Gegenuhrzeigersinn verlaufenden Drehrichtung der Haspel 24 vorlaufend oder voreilend. In der Freigabezone D drehen sich die Schwenkwellen 46 im Uhrzeigersinn, wobei die Zinken 48 einen Nullwinkel mit der radialen Ebene 98 durchlaufen, bis sie einen nacheilenden Winkel an der radialen Ebene 100 erreichen. Zwischen der 10-Uhr-Position und der 11-Uhr-Position drehen sich die Schwenkwellen 46 im Gegenuhrzeigersinn, um die Zinken 48 zur Vorbereitung in den Wiedereintritt in die Annäherungszone in einen voreilenden Winkel zu klappen.

Anhand der Figuren 1 und 3 ist erkennbar, dass das Steuerelement 60 aus mehreren Segmenten 80, 82, 84 und 86 aufgebaut ist. Die Segmente 80, 82, 84, 86 sind mit radialen Befestigungsflanschen 88 an jedem Ende der Segmente 80, 82, 84, 86 hergestellt. Die Befestigungsflansche 88 sind durch Befestigungszusammenbauten 90 mit Muttern und Schrauben aneinander befestigt. Jedes Segment 80, 82, 84, 86 ist gekrümmt, um die endlose Kurvenbahn zu erzeugen, wenn die Segmente 80, 82, 84, 86 an ihren Enden zusammengefügt werden. Die einzelnen Segmente 80, 82, 84, 86 können sich über unterschiedliche Winkelbereiche erstrecken.

Wenn eine andere Bewegung oder Wirkung der Zinken 48 gewünscht wird, beispielsweise in dem Bereich, in dem sie sich mit dem Erntegut in Eingriff befinden, kann das Segment 80 entfernt und durch ein anderes Segment mit einer anderen Kurvenbahn ersetzt werden. Das Segment 80 ist im Bereich, in dem die Zinken 48 auf das Erntegut einwirken, angeordnet, und daher einer größeren Abnutzung als die anderen Segmente 82, 84, 86 ausgesetzt. Das Segment 80 kann daher auch ausgetauscht werden, falls es zu stark abgenutzt ist, ohne dass es nötig wäre, das gesamte Steuerelement 60 auszuwechseln.

Die Speichen 62 sind außerdem am Steuerelement 60 mit abnehmbaren Befestigungen 92 fixiert, wie Zusammenbauten mit Schrauben und Muttern, um das Entfernen und Ersetzen eines oder mehrerer Segmente 80, 82, 84, 86 zu erleichtern. Außerdem sind die Speichen 62 auch an der Platte 64 durch entfernbare Befestigungen 94 angebracht.

Das Steuerelement 60, das in Figur 1 mit vier Segmenten 80, 82, 84, 86 dargestellt ist, ist nur ein Beispiel für ein erfindungsgemäßes, aus Segmenten aufgebautes Steuerelement. Das Steuerelement 60 kann aus einer beliebigen Anzahl von Segmenten aufgebaut sein. Die Erfindung beschränkt sich nicht auf ein Steuerelement 60 mit vier Segmenten 80, 82, 84, 86.

Die Verwendung des erfindungsgemäßen Steuerelements 60 für die Steuerung der Höhe der Zinken 48 der Haspel 24 stellt die Möglichkeit bereit, die Höhe der Zinken 48 und des von den Spitzen 72 der Zinken 48 beschrittenen Wegs zu ändern. Außerdem können durch das Segmentieren des Steuerelements 60 einzelne Segmente 80, 82, 84, 86, die einer erhöhten Abnutzung unterliegen, leicht ausgetauscht werden, ohne dass es nötig ist, das ganze Steuerelement 60 zu ersetzen. Das Steuerelement 60 ist vorzugsweise aus Kunststoff hergestellt. Das erleichtert die Herstellung eines Steuerelements 60 mit einer komplexen Form und einem verminderten Gewicht. Das Steuerelement kann in anderen Verfahren als Gießverfahren und aus anderen Materialien, wie beispielsweise, aber nicht eingeschränkt auf, gepresstem Stahl oder Gusseisen hergestellt sein.

## Patentansprüche

1. Haspel (24) zur drehbaren Anbringung an einer Erntegutbergungsvorrichtung, insbesondere einem Schneidwerk (10), mit wenigstens einer drehbaren Schwenkwelle (46), an der Zinken (48) befestigt sind, und mit einer Verstellvorrichtung, die ein Steuerelement (60) mit einer endlosen Kurvenbahn umfasst, mit der ein die Drehstellung der Schwenkwelle (46) in Abhängigkeit von der Drehstellung der Haspel (24) steuernder Kurvenabnehmer (68) zusammenwirkt, **dadurch gekennzeichnet, dass** sich die mit dem Kurvenabnehmer (68) zusammenwirkende Kurvenbahn des Steuerelements (60) aus wenigstens zwei lösbar befestigten Segmenten (80, 82, 84, 86) zusammensetzt, die in Laufrichtung des Kurvenabnehmers (68) betrachtet jeweils einen Teil der Länge der Kurvenbahn enthalten.

2. Haspel (24) nach Anspruch 1, **dadurch gekennzeichnet, dass** der Kurvenabnehmer (68) eingerichtet ist, über einen Kurbelarm (50) die Drehstellung der Schwenkwelle (46) zu steuern.

3. Haspel (24) nach Anspruch 1 oder 2, **dadurch gekennzeichnet, dass** das Steuerelement (60) ringförmig ist.

4. Haspel (24) nach einem der Ansprüche 1 bis 3, **dadurch gekennzeichnet, dass** die Segmente (80, 82, 84, 86) lösbar an Speichen (62) befestigt sind, die an einem Trägerelement der Haspel (24) fixiert sind.

5. Haspel (24) nach einem der Ansprüche 1 bis 4, **dadurch gekennzeichnet, dass** wenigstens eines der Segmente (80, 82, 84, 86) einzeln demontier- und austauschbar ist.

6. Haspel (24) nach einem der vorhergehenden Ansprüche, **dadurch gekennzeichnet, dass** sie einen Bereich (A) aufweist, in dem die Zinken (48) einer Schwenkwelle (46) in Eingriff mit dem Erntegut gelangen, und dass der diesem Bereich zugeordnete Teil der Kurvenbahn auf einem einzelnen Segment (80) des Steuerelements (60) angeordnet ist.

7. Haspel (24) nach einem der vorhergehenden Ansprüche, **dadurch gekennzeichnet, dass** ein Steuerelement (60) an jedem Ende der Schwenkwelle (46) angeordnet ist, und dass mit den parallelen Kurvenbahnen der beiden Steuerelemente (60) jeweils ein Kurvenabnehmer (68) zusammenwirkt.

8. Haspel (24) nach einem der vorhergehenden Ansprüche, **dadurch gekennzeichnet, dass** die Kurvenbahn des Steuerelements (60) ein Kanal (66) ist, in die der Kurvenabnehmer (68) eingreift.

9. Erntegutbergungsvorrichtung, insbesondere Schneidwerk (10) mit einer Haspel (24) nach einem der vorhergehenden Ansprüche.

## Claims

1. A reel (24) suited for being rotatably mounted on a harvesting platform, in particular a cutting platform (10), comprising at least one rotatable rockshaft (46) on which fingers (48) are mounted, and comprising an adjusting device with a control element (60) having an endless curve path, a curve follower (68) interacting with the curve path, the curve follower controlling the angular position of the rockshaft (46) dependent on the angular position of the reel (24), **characterized in that** the control element (60) comprises at least two releasably mounted segments (80, 82, 84, 86), each of the segments being provided with a part of the curve path.

2. A reel (24) according to claim 1, **characterized in that** the curve follower (68) is arranged to control the angular position of the rockshaft (46) by means of a crank arm (50).

3. A reel (24) according to claim 1 or 2, **characterized in that** the control element (60) is ring-shaped.

4. A reel (24) according to one of claims 1 to 3, **characterized in that** the segments (80, 82, 84, 86) are releasably mounted to spokes (62) which are mounted to a support structure of the reel (24).

5. A reel (24) according to one of the preceding claims, **characterized in that** at least one of the segments (80, 82, 84, 86) can be separately dismounted and exchanged.

6. A reel (24) according to one of the preceding claims, **characterized in that** it is provided with a zone (A) in which the fingers (48) of a rockshaft (46) engage the crop, and that the part of the curve path corresponding to this zone is arranged on a single segment (80) of the control element (60).

7. A reel (24) according to one of the preceding claims, **characterized in that** a control element (60) is located at each end of the rockshaft (46), and that a curve follower (68) interacts with each one of the parallel curve paths of the control elements (60).

8. A reel (24) according to one of the preceding claims, **characterized in that** the curve path of the control element (60) is a channel (66) in which the curve follower (68) engages.

9. A harvesting platform, in particular a cutting platform (10) comprising a reel according to one of the preceding claims.

## Revendications

1. Rabatteur (24) pour montage rotatif sur une machine de récolte, en particulier sur une barre de coupe (10) comportant au moins un arbre rotatif (46) sur lequel des griffes (48) sont fixées et avec un dispositif de réglage comprenant un organe de commande (60) avec une piste de came sans fin qui interagit avec une came (68) qui commande la position rotative de l'arbre (46) en fonction de la position rotative du rabatteur (24), **caractérisé en ce que** la piste de came de l'organe de commande (60) qui interagit avec la came (68) se compose au moins de deux segments amovibles fixés (80, 82, 84, 86) qui, dans le sens machine de la came (68), contiennent respectivement une partie de la longueur de la piste de came.

2. Rabatteur (24) selon la revendication 1, **caractérisé en ce que** la came (68) est montée sur un bras d'adaptation (50) qui commande la position rotative de l'arbre (46).

3. Rabatteur (24) selon la revendication 1 ou 2, **caractérisé en ce que** l'organe de commande (60) est en forme d'anneau.

4. Rabatteur (24) selon l'une quelconque des revendications 1 à 3, **caractérisé en ce que** les segments (80, 82, 84, 86) sont fixés de façon amovible à des barres (62), qui sont elles-mêmes fixées à un élément porteur du rabatteur (24).

5. Rabatteur (24) selon l'une quelconque des revendications 1 à 4, **caractérisé en ce qu'**au moins un des segments (80, 82, 84, 86) est démontable et interchangeable indépendamment des autres segments.

6. Rabatteur (24) selon l'une des revendications précédentes, **caractérisé en ce qu'**il comporte une zone dans laquelle les griffes (48) d'un arbre (46) se mettent en prise avec la récolte et que la partie de la piste de came correspondant à cette zone est montée sur un seul segment (80) de l'organe de commande (60).

7. Rabatteur (24) selon l'une des revendications précédentes, **caractérisé en ce qu'**un organe de commande (60) est monté sur chaque extrémité de l'arbre (46) et **en ce qu'**une came (68) interagit respectivement avec des pistes de came parallèles des deux organes de commande (60).

8. Rabatteur (24) selon l'une des revendications précédentes, **caractérisé en ce que** la piste de came de l'organe de commande (60) est un tube (66) dans lequel la came s'engrène (68).

9. Machine à récolte, en particulier barre de coupe (10) avec un rabatteur (24) selon l'une des revendications précédentes.
